Europäisches Patentamt

European Patent Office

Office européen des brevets

(19)

(11) Publication number: **0 252 031**
A1

# (12) EUROPEAN PATENT APPLICATION

(21) Application number: **87830250.4**

(22) Date of filing: **01.07.87**

(51) Int. Cl.4: **F 16 F 7/12**
**B 60 R 19/34, B 62 D 1/18**

(30) Priority: **04.07.86 IT 6754686**

(43) Date of publication of application:
**07.01.88 Bulletin 88/01**

(84) Designated Contracting States:
**AT BE CH DE ES FR GB IT LI NL SE**

(71) Applicant: **Firgat S.r.l.**
**Corso Brescia 62**
**I-10152 Torino (IT)**

(72) Inventor: **Tondato, Carlo**
**Corso Brescia 62**
**I-10152 Torino (IT)**

(74) Representative: **Jacobacci, Filippo et al**
**c/o JACOBACCI-CASETTA & PERANI S.p.A. Via Alfieri 17**
**I-10121 Torino (IT)**

(54) **Energy-absorption device.**

(57) The invention relates to an energy absorber which uses the plastic deformation of metal strips.

The strip (5,6) is wound, while hot, into a spiral on a pin (3,4) through at least one and a quarter turns and has a thickness of at least half that of the pin.

When the outer end (5a, 6a) of the strip is pulled so as to tend to unwind the strip (5,6) from the pin (3,4),the strip deforms plastically with absorption of energy in its movement from its initial wound condition to a final substantially straight condition. The deformation of the strip from the curved condition to the straight condition occurs through progressively-decreasing radii of curvature, which enables the energy absorption resulting from the plastic deformation to be optimised.

FIG. 3

## Description

Energy-absorption device

The present invention relates to an energy absorption device of the type using the plastic deformation of metal strips.

Energy absorption devices of the said type are known from U.S. Patent No. 3,377,044 and U.K. Patent No. 1,601,809 in which the plastic deformation of the metal strip is achieved by relative movement along the working direction of the absorber between the metal strip and a frame carrying rollers disposed so as to impart successive folds to the strip in opposite directions.

These known devices enable a favourable force/deformation graph to be achieved (that is a graph in which the force remaining substantially constant at the maximum value for a considerable extent of the deformation) but are very bulky and their use is thus limited to applications in which there are no limitations on bulk, as, for example, in the case of energy absorbers used to stop moving vehicles or to retain loads in aircraft for transporting goods.

The object of the present invention is to provide an energy-absorption device of the type specified above which, while allowing a favourable force/deformation graph to be achieved, is very compact in structure so as to allow it to be used even when the space available is limited, for example in motor vehicles, as in the case of energy absorbers for interposition between the bumpers and the bodywork or absorbers intended to be inserted in the steering column.

In order to achieve this object, the present invention provides an energy absorption device which uses the plastic deformation of metal strips, and the main characteristic of which lies in the fact that it comprises:

- a pair of frames guided for movement relative to each other in the direction in which the absorber is to operate,
- at least one pin supported at its ends by one of the frames and extending perpendicular to the said working direction of the absorber,
- a metal strip wound into a spiral on the said pin (or on each pin) and having a thickness equal to at least half the radius of the respective pin; the outer end of the strip (or strips) being fixed to the other frame, whereby the application of a collision force tending to bring the two frames closer together causes unwinding of the strip (or of each strip) from the respective pin with absorption of energy due to the plastic deformation, which the strip (or each strip) undergoes in its movement from its initial spirally-wound condition to a final condition in which the strip is substantially straight.

Further characteristics and advantages of the present invention will become apparent from the description which follows with reference to the appended drawings, provided purely by way of non-limiting example, in which:

Figure 1 is a perspective view of an energy absorber according to the present invention,

Figure 2 is a section taken on the line II-II of Figure 1,

Figure 3 is a section taken on the line III-III of Figure 1,

Figure 4 is a section similar to Figure 3 illustrating the absorber in the position taken up at the end of the energy-absorption phase and,

Figure 5 is a force/deformation graph of the absorber of the present invention.

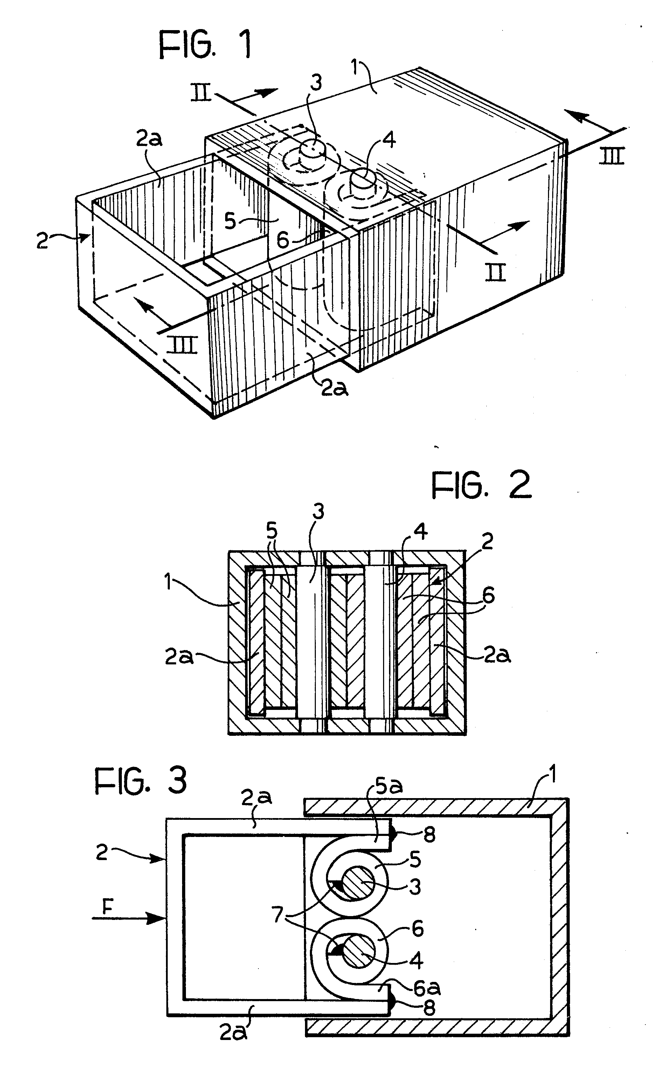

The energy absorber illustrated in Figures 1 to 4 comprises a fixed frame 1 in the form of a hollow parallelepiped-shaped body open at one end, and a movable frame 2 in the form of a U-shaped bracket the arms 2a of which are inserted in the aperture of the fixed frame 1 adjacent the inner surfaces of the side walls of the frame.

Two pins 3 and 4 are rotatably supported by the two upper and lower base walls of the frame 1 close to the said open end.

Two metal strips 5,6 are wound into spirals in opposite senses on the pins 3 and 4.

The inner end of each strip is welded to the respective pin as indicated at 7 and each strip has an external end portion 5a, 6a which is straight and in contact with the inner surface of one of the arms 2a of the said U-shaped bracket.

The end of each portion 5a, 6a is welded to the end of the adjacent arm 2a as indicated at 8.

The strips 5a, 6a have a thickness which is equal to at least half the radius of the respective pin 3, 4 whereby the strips can be wound onto spirals on the respective pins only after they have been brought to the plastic state by heating.

Each strip 5,6 is wound on to its respective pin 3,4 through an angle of at least one and a quarter turns (that is through 450°), as illustrated in the drawings.

When the movable frame 2 is subjected to a force as indicated by F in Figure 3, the movable frame 2 penetrates the fixed frame 1 causing the strips 5, 6 to unwind from their respective pins 3, 4, which rotate correspondingly in the fixed frame 1.

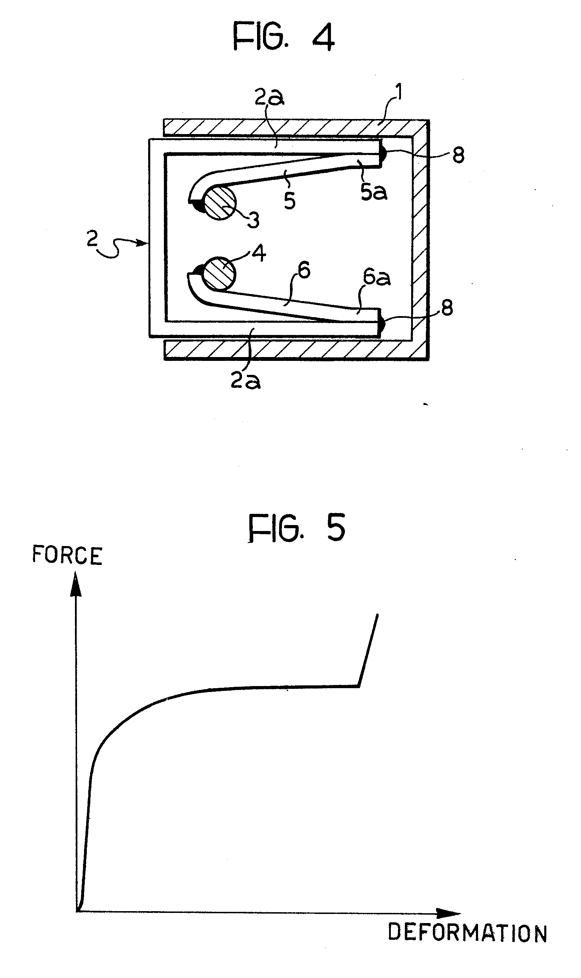

Energy is absorbed due to the plastic deformation of the strips 5,6 in their movement from their initial, spirally-wound conditions illustrated in Figure 3 to their final conditions illustrated in Figure 4 in which the strips 5,6 are substantially straight.

From the force/deformation graph of Figure 5, it is clear that the force remains constant at the maximum values reached after a brief initial unwinding of the strips, for a considerable extent of the deformation. This results from the fact that, as the strips unwind from their curved conditions to the straight condition, the deformation occurs through progressively-decreasing radii of curvature which enables the energy absorbed to be optimised.

This optimising would not occur if the strip were wound only partially on the pin, that is, so as to unwind from a cylindrical configuration instead of from a spiral configuration. In this case, in fact, the applicant has found experimentally that the force rapidly reaches the maximum value in the force/deformation graph and then falls to a lower value and stabilises at this lower value as the deformation increases, which obviously results in less absorption of energy.

Obviously the number of strips could be other than the two illustrated by way of example depending on the collision force which the device is intended to absorb.

## Claims

1. Energy-absorption device using the plastic deformation of metal strips, characterised in that it comprises:
- a pair of frames (1,2) guided for movement relative to ech other in the direction (F) in which the absorber is to operate
- at least one pin (3,4) supported at its ends by one of the frames (1) and extending perpendicular to the said working direction (F) of the absorber,
- a metal strip (5,6) wound into a spiral on the said pin (or on each pin) and having a thickness equal to at least half the radius of the respective pin (3,4); the outer end (5a, 6a) of the strip (or strips) (5,6) being fixed to the other frame (2), whereby the application of a collision force (F) tending to bring the two frames (1,2) closer together causes unwinding of the strip (or of each strip) (5,6) from the respective pin (3,4) with absorption of energy due to the plastic deformation, through progressively decreasing radii of curvature, which the strip (or each strip) undergoes in its movement from its initial, spirally-wound condition to a final condition in which the strip is substantially straight.

2. Device according to Claim 1, characterised in that the inner end of the strip (or of each strip) (5,6) is fixed to the pin (3,4) on which it is wound in a spiral and in that the pin (3,4) is rotatably supported by the respective frame (1).

3. Device according to Claim 1, characterised in that the strip (or each strip)( (5,6) is wound into a spiral on the respective pin (3,4) through at least one and a quarter turns (450°).

4. Device according to Claim 1, characterised in that the strip (or each strip) (5,6) is wound after it has been heated to bring it to a plastic state.

5. Device according to Claim 1, characterised in that the strip spirally-wound (or each strip) (5,6) has an outer end portion (5a, 6a) which is straight and arranged tangentially along the direction of working (F) of the absorber.

6. Device according to Claims 1 to 5, characterised in that it includes:
- a fixed frame (1) in the form of a parallelepiped-shaped hollow body open at one end,
- a movable frame (2) in the form of a U-shaped bracket, the arms (2a) whereof are inserted in the aperture of the said parallelepiped-shape hollow body (1) in contact with the internal surfaces of the side walls of the fixed frame (1),
- two pins (3,4) rotatably supported in the fixed frame (1) close to the open end, and
- two strips (5,6) wound in opposite senses on the two pins (3,4); the end straight portion (5a,6a) of each of the two strips (5,6) being in contact with the inner surface of one of the arms of the said U-shaped bracket (2) and being welded at its end to the end of the adjacent arm (2a).

0252031

FIG. 1

FIG. 2

FIG. 3

0252031

## FIG. 4

## FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-1 542 968 (SIGMATEX) * Page 4, left-hand column, paragraph 3; figure 9 * | 1 | F 16 F 7/12<br>B 60 R 19/34<br>B 62 D 1/18 |
| A | | 2,3,5 | |
| Y | MACHINE DESIGN, vol. 45, October 1973, page 48, Cleveland US; "Scanning for ideas: steel strips soak up shock" | 1 | |
| A | Idem | 5,6 | |
| A | US-A-4 358 136 (TSUGE) * Column 1, line 46 - column 2, line 47; figures 1-3 * | 1,3,5 | |
| | | | TECHNICAL FIELDS SEARCHED (Int. Cl.4) |
| A | US-A-2 578 903 (SMITH) * Column 1, line 35 - column 2, line 12; figures 1-5 * | 1,5,6 | F 16 F<br>B 60 R<br>B 62 D<br>B 60 P<br>B 64 C |
| A | GB-A-2 101 705 (DOMAGALA) | | B 64 D<br>B 61 K |
| A | GB-A-2 059 006 (TIACCLES) | | |
| A | US-A-3 504 567 (OHASHI) | | |
| | --- -/- | | |

The present search report has been drawn up for all claims

| Place of search | Date of completion of the search | Examiner |
|---|---|---|
| THE HAGUE | 07-10-1987 | ESPEEL R.P. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-3 132 721 (JACKSON) | | |
| A | US-A-3 126 072 (JOHANSSON) | | |
| A | FR-A-1 440 146 (G.A.A.A.) | | |

TECHNICAL FIELDS SEARCHED (Int. Cl.4)

The present search report has been drawn up for all claims

| Place of search | Date of completion of the search | Examiner |
|---|---|---|
| THE HAGUE | 07-10-1987 | ESPEEL R.P. |